# FASCICULE DE BREVET EUROPEEN

(11) **EP 2 193 299 B1**
(45) Date de publication et mention de la délivrance du brevet: **09.03.2011**
(21) Numéro de dépôt: 08857827.3
(22) Date de dépôt: 17.09.2008
(51) Int. Cl.: F16L 1/12, F16L 1/24, E21B 17/01

(54) **METHODE D'INSTALLATION D'UNE CONDUITE TUBULAIRE SOUS-MARINE**
VERFAHREN ZUR INSTALLATION EINER UNTERWASSER-ROHRLEITUNG
METHOD OF INSTALLING A TUBULAR UNDERSEA PIPELINE

(30) Priorité: 03.10.2007 FR 0706947
(43) Date de publication de la demande: 09.06.2010
(73) Titulaire: Technip France, 92400 Courbevoie (FR)
(72) Inventeur: LUPPI, Ange, F-30000 Nîmes (FR)
(74) Mandataire: Bertrand, Didier
(86) Numéro de dépôt international: PCT/FR2008/001299
(87) Numéro de publication internationale: WO 2009/071762

(56) Documents cités:
- WO-A-2006/120351
- FR-A- 2 809 136
- GB-A- 2 371 065

## Description

La présente invention se rapporte à une méthode d'installation d'une conduite tubulaire sous-marine et à l'installation sous-marine correspondante, permettant de transporter les hydrocarbures entre un fond sous-marin et une surface.

L'exploitation des champs pétrolifères sous-marins requière des installations particulières, lesquelles sont relativement complexes à mettre en oeuvre. Le milieu marin a ceci de particulier, qu'il présente un fond recouvert d'une hauteur d'eau plus ou moins importante, délimitée par une surface et que l'on ne peut y évoluer librement. Et il est généralement nécessaire de mettre en oeuvre des robots commandés pour installer les différents éléments des installations entre le fond et la surface.

Ces installations comprennent usuellement une conduite tubulaire sous-marine flexible ou bien rigide et un flotteur adapté à flotter au voisinage de ladite surface pour maintenir la conduite en suspension dans l'eau via un dispositif d'accrochage. La conduite sous-marine présente une partie montante, qui s'étend depuis le fond marin jusqu'à une position voisine de la surface en dessous d'une zone relativement agitée ; une partie de raccordement qui permet de relier la conduite montante à des installations de surface aptes à stocker un hydrocarbure ; et une portion intermédiaire recourbée en col de cygne entre la partie montante sensiblement verticale et la partie de raccordement qui s'étend en caténaire jusqu'à la surface. Le dispositif d'accrochage permet en outre d'accrocher ensemble, ladite partie montante et ladite partie de raccordement en suspension et de maintenir ladite portion intermédiaire recourbée en col de cygne entre ladite partie montante et ladite partie de raccordement. Ladite portion intermédiaire recourbée est généralement rigide et elle est ainsi généralement installée dans un bâti de réception. On pourra notamment se référer au document FR 2 809 136, lequel décrit une telle installation.

Ce type d'installation doit être au moins en partie installé sous la surface et en particulier en dessous de la zone agitée. Car en effet, il est impossible de dérouler à partir d'un bâtiment de surface et à travers son puits de travail, la conduite tubulaire équipée du dispositif d'accrochage, car il est bien trop volumineux. Ainsi, la partie montante est d'abord déroulée puis maintenue en suspension dans l'eau ; on vient ensuite y accrocher le dispositif d'accrochage pour relier la bouée et la conduite montante, puis on vient accrocher la partie de raccordement en la guidant depuis la surface. Ces opérations sont relativement longues et par conséquent les coûts d'installation sont importants.

Un problème qui se pose alors et que vise à résoudre la présente invention est de fournir une méthode d'installation plus économique qui permette d'installer la conduite plus rapidement et avec les moyens habituels.

Dans le but de résoudre ce problème la présente invention propose, selon un premier aspect, une méthode d'installation d'une conduite tubulaire sous-marine de transport d'hydrocarbures entre un fond marin et une surface, ladite conduite tubulaire sous-marine présentant une partie montante, une partie de raccordement en surface et une portion intermédiaire entre ladite partie montante et ladite partie de raccordement, ladite méthode étant du type selon laquelle on fournit un flotteur adapté à flotter au voisinage de ladite surface pour accrocher ensemble, ladite partie montante et ladite partie de raccordement en suspension de façon à maintenir ladite portion intermédiaire incurvée en col de cygne entre ladite partie montante et ladite partie de raccordement, selon l'invention elle comprend les étapes suivantes : on stocke ladite conduite tubulaire sous-marine sur un bâtiment flottant à ladite surface ; on fournit un dispositif d'accrochage déformable pour relier ensemble ladite partie montante et ladite partie de raccordement sensiblement parallèlement à ladite portion intermédiaire, ledit dispositif comprenant une première partie longitudinale et une seconde partie reliée dans une zone d'accrochage de ladite première partie par un lien pivotant ; on relie ledit flotteur et ladite zone d'accrochage de ladite première partie longitudinale, tandis qu'on plonge ladite portion intermédiaire et ledit dispositif d'accrochage pendus à ladite partie montante ; et enfin, on dévide ladite partie montante vers ledit fond de façon que ladite partie de raccordement soit retenue par ledit flotteur par l'intermédiaire de ladite seconde partie, et que ladite partie montante bascule vers ledit fond en entraînant, en pivotement autour de ladite zone d'accrochage, ladite première partie en incurvant ladite portion intermédiaire, ladite partie montante étant retenue suspendue audit flotteur par l'intermédiaire de ladite première partie.

Ainsi, une caractéristique de l'invention réside dans la mise en oeuvre d'un dispositif d'accrochage déformable, apte à être installé replié le long de la conduite tubulaire, et par conséquent qui peut être dévidé depuis le bâtiment de surface à travers un système de guidage pour être déployé ensuite lorsqu'il est dans l'eau. Aussi, la conduite tubulaire peut être installée rapidement depuis le bâtiment de surface. En particulier, la portion intermédiaire de conduite, qui est maintenant flexible contrairement à celle décrite dans l'art antérieur, peut être installée initialement entre la partie de raccordement et la partie montante dans leur prolongement. Ce n'est qu'ensuite, une fois dans l'eau, que la partie intermédiaire est courbée pour former un col de cygne. Afin d'éviter, que cette partie intermédiaire flexible ne se plie lorsque la seconde partie pivote, ce qui endommagerait la conduite, on maintient avantageusement lesdites deux parties du dispositif d'accrochage inclinées l'une par rapport à l'autre en position fixe. Ainsi, ladite portion intermédiaire incurvée est maintenue selon un rayon de courbure supérieur à un rayon de courbure limite. Ce rayon de courbure sera alors déterminé précisément par l'inclinaison des deux parties du dispositif d'accrochage l'une par rapport à l'autre. En outre, soit de manière complémentaire ou alors en substitution, on définit des segments de ladite portion intermédiaire et on limite le pivotement desdits segments les uns par rapport aux autres de manière à limiter le rayon de courbure de ladite portion intermédiaire.

Selon un mode particulier de mise en oeuvre de l'invention, on stocke d'un côté dudit bâtiment de surface ladite partie de raccordement reliée à ladite portion intermédiaire et d'un autre côté, ladite partie montante libre. Ainsi qu'on l'expliquera ci-après de manière plus détaillée, la partie de raccordement et la portion intermédiaire forme une seule pièce, et la partie montante forme une autre pièce. Cette dernière est généralement plus rigide que les deux précédentes. Aussi, elles sont enroulées différemment sur le bâtiment de surface et à des endroits différents. Ainsi, de manière préférée on accroche ensemble ladite portion intermédiaire et ladite première partie longitudinale à une ligne de traction qui s'étend en boucle sous le bâtiment de surface entre les deux côtés précités, tandis que ladite seconde partie et ladite portion intermédiaire sont accrochées ensemble et suspendues à ladite partie de raccordement ; et on dévide ladite partie de raccordement dudit un côté tandis qu'on renvide ladite ligne de traction dudit autre côté en formant une boucle sous ledit bâtiment de surface de manière à venir raccorder ladite portion intermédiaire et ladite première partie longitudinale accrochées ensemble, à ladite partie montante, sur ledit bâtiment de surface.

En outre, durant l'installation, on écarte ledit flotteur dudit bâtiment de surface, après avoir relié ledit flotteur à ladite zone d'accrochage de ladite première partie longitudinale et plongé ladite portion intermédiaire et ledit dispositif d'accrochage déformable, de manière à étendre en caténaire ladite partie montante et ladite première partie. De la sorte, le pivotement de la première partie longitudinale du dispositif d'accrochage débute lorsque l'on éloigne le flotteur et s'effectue de manière progressive ensuite lorsque l'on dévide la conduite montante.

Enfin, on étire ladite partie montante vers ledit fond après avoir dévidé entièrement ladite partie montante qui a alors rejoint le fond, de manière à enfoncer ledit flotteur sous ladite surface pour aligner et maintenir en tension sensiblement verticalement ladite partie montante et ladite première partie. Aussi, la première partie étant orientée sensiblement verticalement, la seconde partie du dispositif d'accrochage est inclinée par rapport à la verticale et retient la partie de raccordement et partant, la portion intermédiaire de conduite dans sa position de courbure minimale.

Selon un second aspect, la présente invention propose une installation sous-marine de transport d'hydrocarbures entre un fond marin et une surface, comprenant une conduite tubulaire sous-marine, un flotteur adapté à flotter au voisinage de ladite surface et un dispositif d'accrochage pour accrocher ladite conduite audit flotteur, ladite conduite tubulaire sous-marine présentant une partie montante, une partie de raccordement en surface et une portion intermédiaire entre ladite partie montante et ladite partie de raccordement, ledit dispositif d'accrochage permettant d'accrocher ensemble, ladite partie montante et ladite partie de raccordement en suspension et de maintenir ladite portion intermédiaire incurvée en col de cygne entre ladite partie montante et ladite partie de raccordement, selon l'invention, ledit dispositif d'accrochage comprend une première partie longitudinale et une seconde partie reliée dans une zone d'accrochage de ladite première partie par un lien pivotant, de manière à relier ensemble ladite partie montante et ladite partie de raccordement sensiblement parallèlement à ladite portion intermédiaire, ladite zone d'accrochage de ladite première partie longitudinale et ledit flotteur étant adaptés à être reliés ensemble ; et ladite première partie est adaptée à pivoter autour de ladite zone d'accrochage en incurvant ladite portion intermédiaire en col de cygne lorsque ladite partie montante est dévidée et bascule vers ledit fond, tandis que ladite partie de raccordement est retenue par ledit flotteur par l'intermédiaire de ladite seconde partie et que ladite partie montante est retenue suspendue audit flotteur par l'intermédiaire de ladite première partie. La première partie longitudinale est alors reliée à la partie montante, tandis que la seconde partie est reliée, elle, à la partie de raccordement de la conduite.

Avantageusement, selon un mode de réalisation particulier, ladite première partie longitudinale comporte deux montants sensiblement parallèles et deux entretoises opposées l'une de l'autre pour maintenir de manière rigide lesdits montants espacés l'un de l'autre ; une première entretoise étant destinée à recevoir ladite partie montante et une seconde entretoise définissant ladite zone d'accrochage, tandis que ladite partie intermédiaire de conduite est apte à s'étendre librement entre lesdits montants de manière à pouvoir être recourbé librement durant le pivotement de la première partie du dispositif d'accrochage.

En outre, ladite seconde partie comprend avantageusement deux liens flexibles montés sur ladite seconde entretoise respectivement au droit desdits montants de manière à autoriser le mouvement de la portion intermédiaire de conduite entre les deux liens durant le basculement de la partie montante. De plus, les deux liens assurent une symétrie dans la reprise des efforts qui s'exercent alors entre la partie de raccordement et le flotteur.

Précisément, et dans le but de respecter cette symétrie dans la reprise des efforts, ladite seconde partie comprend en outre une bague de retenue apte à recevoir ladite partie de raccordement, ladite bague de retenue présentant deux demi-arbres diamétralement opposés en saillie, lesdits deux liens flexibles étant reliés respectivement aux deux demi-arbres.

Au surplus, ledit dispositif d'accrochage comporte en outre et de manière préférentielle, un bras de blocage pour maintenir lesdites deux parties du dispositif d'accrochage inclinées l'une par rapport à l'autre en position fixe de manière à maintenir ladite portion intermédiaire de conduite incurvée selon un rayon de courbure supérieur à un rayon de courbure limite. Selon un mode de réalisation particulier, ledit bras de blocage est télescopique pour être apte à longer ladite portion intermédiaire étendue dans une position étirée dudit bras. De la sorte, lorsque la première partie du dispositif d'accrochage pivote, le bras télescopique se raccourcit, jusqu'a une longueur déterminée qui conditionne le rayon de courbure de la portion intermédiaire de conduite, une fois la conduite installée. De plus, et selon un mode de mise en oeuvre privilégié, le dispositif d'accrochage est équipé de deux bras télescopiques parallèles respectivement montés sur la première entretoise et sur les demi-arbres. Les deux bras télescopiques de blocage sont alors espacés l'un de l'autre, de manière à autoriser le passage de la portion intermédiaire de conduite lors du pivotement de la première partie du dispositif d'accrochage.

Au surplus, ladite portion intermédiaire qui est avantageusement le prolongement de la partie de raccordement, est logée à l'intérieur d'un fourreau à vertèbres de manière à limiter le rayon de courbure de ladite portion intermédiaire lorsqu'elle est incurvée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle en perspective montrant un élément d'une installation sous-marine conforme à l'invention dans une position déployée ;
- la Figure 2 est une vue schématique partielle de côté, montrant l'élément illustré sur la Figure 1 dans une position repliée ;
- la Figure 3 est une vue schématique d'ensemble montrant l'élément représenté sur la Figure 2 dans la position repliée et d'autres éléments de l'installation sous-marine ;
- la Figure 4 est une vue schématique de l'élément représenté sur la Figure 2 dans une première position partielle de déploiement ;
- la Figure 5 est une vue schématique de l'élément représenté sur la Figure 4 dans une deuxième position partielle de déploiement ;
- la Figure 6 est une vue schématique d'ensemble montrant l'élément représenté sur la Figure 1 dans la position déployée et d'autres éléments de l'installation sous-marine ; et,
- la Figure 7 est une vue schématique d'ensemble dans une phase d'installation préalable à la phase d'installation illustrée sur la Figure 3, et selon un mode particulier d'installation.

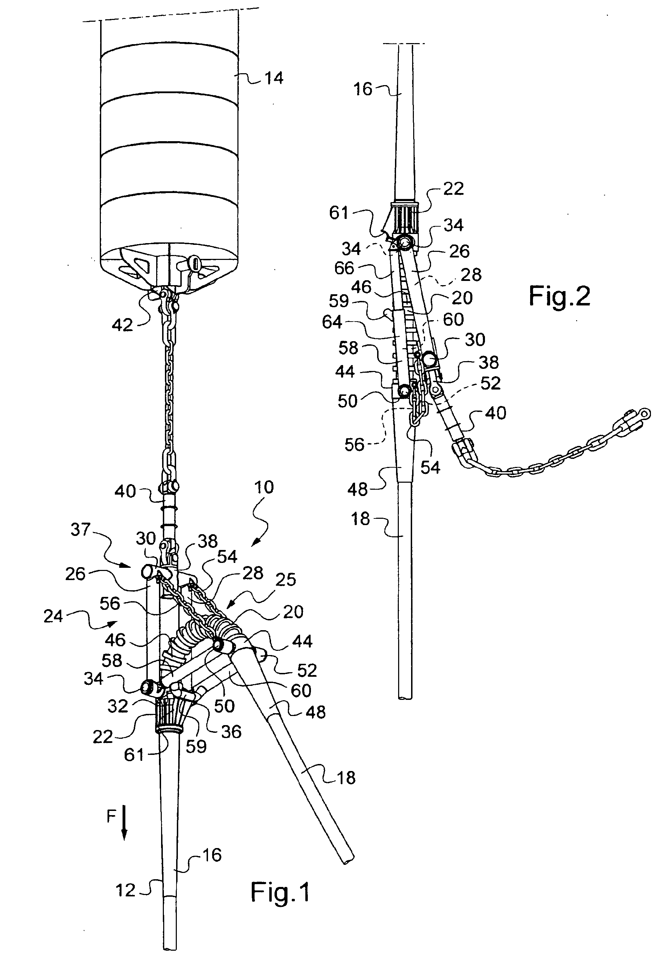

La Figure 1 illustre un dispositif d'accrochage 10 conforme à l'invention et dans une position déployée dans un milieu marin entre un fond marin et une surface. On décrira tout d'abord ce dispositif d'accrochage 10 en détail dans une position d'équilibre et déployée pour ensuite décrire plus précisément son mode d'installation.

Ce dispositif d'accrochage 10 permet de suspendre une conduite tubulaire sous-marine 12 qui est ici flexible, à un flotteur 14. En outre, le dispositif d'accrochage 10 maintient ensemble trois parties de la conduite, une partie montante 16 qui s'étend sensiblement verticalement pour rejoindre le fond marin, une partie de raccordement 18 qui s'étend en caténaires pour rejoindre la surface et une portion intermédiaire 20 incurvée en col de cygne qui forme la jonction entre la partie montante 16 et la partie de raccordement 18. La partie montante 16 est raccordée à un manchon de connexion 22 auquel est elle-même raccordée une extrémité de la portion intermédiaire 20. On observera que la partie montante de conduite 16 est, selon le mode de mise en oeuvre décrit ici, flexible, mais qu'une partie montante rigide est tout aussi envisageable.

Le dispositif d'accrochage 10 comporte une première partie longitudinale 24 et une seconde partie 25. La première partie longitudinale 24 présente deux montants parallèles 26, 28 reliés entre eux à leurs extrémités par deux entretoises opposées 30, 32. Ainsi, les deux montants 26, 28 et les deux entretoises opposées 30, 32, forment-ils un cadre rigide rectangulaire d'une longueur comprise entre cinq mètres et vingt mètres, par exemple dix mètres et d'une largeur comprise entre un mètre et six mètres, par exemple trois mètres. Une première entretoise 32, est reliée à la partie montante 16 par l'intermédiaire du manchon de connexion 22. Ce dernier qui permet le raccordement de la partie montante 16 et de la portion intermédiaire 20 présente deux premiers demi-arbres 34, 36 qui s'étendent en saillie du manchon de connexion 22 dans des sens diamétralement opposés. La première entretoise 32 est ainsi constituée par le manchon de connexion 22 et les deux demi-arbres qui ne forment qu'une seule pièce. Les montants 26, 28 sont ainsi montés à rotation respectivement sur ces deux demi-arbres 34, 36. On observera par ailleurs, que la portion intermédiaire 20, peut librement s'étendre entre les montants 26, 28. À l'extrémité opposée de la première partie longitudinale 24, une seconde entretoise 30 reliant les deux montants 26, 28 de manière rigide et définissant une zone d'accrochage 37, présente un organe d'accrochage 38 qui s'étend perpendiculairement à la seconde entretoise 30 sensiblement entre les montants 26, 28 et dans un sens opposé. Cet organe d'accrochage 38 est lui-même relié à une ligne 40 accrochée dans une extrémité 42 du flotteur 14. Ainsi, la charge de la partie montante 16 qui tend à exercer une force F dirigée vers le fond est-elle reprise par le flotteur 14 par l'intermédiaire de la première partie longitudinale 24 et de la ligne 40.

Avant de décrire en détail la seconde partie 25 du dispositif d'accrochage 10, on décrira la portion intermédiaire 20 et la partie de raccordement 18 qui ne forme ici en réalité qu'une seule et un même conduit. En effet, la portion intermédiaire 20 est délimitée de la partie de raccordement 18 par une bague 44 qui enserre la conduite. La conduite est alors, dans la portion intermédiaire 20, entre le manchon de connexion 22 et la bague 44, équipée d'un fourreau à vertèbres 46 bien connu, qui permet de limiter le rayon de courbure de la portion intermédiaire 20 au-dessus d'un rayon de courbure limite, tandis que vers la portion de raccordement 18, la conduite est équipée d'un manchon raidisseur 48, par exemple en polyuréthane, qui permet de conférer une résistance en flexion à la partie de raccordement 18 au voisinage de la bague 44. La bague 44 est alors aussi solidaire, à la fois du manchon raidisseurs 48 et du fourreau à vertèbres 46. En outre, la bague 44 présente deux seconds demi-arbres 50, 52 qui s'étendent en saillie de la bague 44 dans des directions diamétralement opposées.

Ainsi, la seconde partie 25 du dispositif d'accrochage 10 comporte deux liens flexibles 54, 56 constitués de chaînes, d'une longueur voisine de la longueur desdits montants 26, 28 et qui relie de manière parallèle et respectivement, la seconde entretoise 30 et les deux seconds demi-arbres 50, 52. Ces liens flexibles 54, 56 sont accrochés sur la seconde entretoise 30 respectivement au droit des montants 26, 28. Ils sont ici étendus et forment respectivement un angle avec les montants 26, 28, compris entre 50 et 70° par exemple 60°. Ces deux liens flexibles 54, 56 permettent de retenir en traction la partie de raccordement 18.

Par ailleurs, la bague 44 est maintenue à distance de la première entretoise 32 par l'intermédiaire de bras de blocage, 58, 60 reliant parallèlement et respectivement les premiers demi-arbres 34, 36 du manchon de connexion 22 et les seconds demi-arbres 50, 52 de la bague 44. Ainsi qu'on le décrira ci-après, les bras de blocage 58, 60 sont télescopiques et ils sont ici bloqués dans leur position rétractée. Pour ce faire, les bras de blocage 58, 60 sont reliés ensemble par une pièce de liaison 59 en arceau, venant en butée contre une partie de réception 61 ménagée sur le manchon de connexion 22. De la sorte, la traction dirigée vers le fond au niveau de la bague 44 par la partie de raccordement 18 qui est étendue en caténaire est, elle, reprise par les liens flexibles 54, 56 mais aussi par les bras de blocage 58, 60 qui travail en compression, de sorte que la portion intermédiaire 20 de conduite est maintenue dans sa position en forme de col de cygne, sans que son rayon de courbure ne puisse diminuer.

On observera que les bras de blocage 58, 60 dans leur position rétractée, présentent une longueur voisine de celle des montants 26, 28 et qu'ils définissent ainsi avec les liens flexibles 54, 56 étendues et les montants 26,28, deux triangles sensiblement isocèles.

Le dispositif d'accrochage 10 conforme à l'invention, outre qu'il permet de suspendre la conduite flexible à un flotteur 14 en maintenant la portion intermédiaire 20 incurvée en col de cygne, présente l'originalité de pouvoir se replier et se déployer au cours de l'installation de la conduite sous-marine.

Ainsi, la Figure 2 illustre le dispositif d'accrochage 10 dans une position repliée et suspendue à la partie montante 16 qui est, comme on l'expliquera ci-après, dévidée à partir du bâtiment de surface. On observera que la portion intermédiaire 20 s'étend longitudinalement dans le prolongement de la partie montante 16. Le dispositif d'accrochage 10 est dans une position décalée de 180° par rapport à la position qu'il a sur la Figure 1. On retrouve alors, le manchon de connexion 22 sur lequel les montants 26, 28 sont montées pivotants autour respectivement des premiers demi-arbres 34, 36, et la portion intermédiaire 20 équipée de son fourreau à vertèbres 46 et qui retient la partie de raccordement 18 dans son prolongement. Les liens flexibles 54, 56 sont alors repliés sur eux-mêmes, car la portion intermédiaire 20 s'étend longitudinalement sensiblement entre les montants 26, 28 de la première partie 24 et par conséquent, les deux seconds demi-arbres 50, 52 et la secondes entretoises 30, où sont respectivement rattachés précisément les liens flexibles 54, 56, sont dans cette position, rapprochés. On retrouve également les bras de blocage 58, 60 télescopiques dans une position étendue où apparaissent deux éléments 64, 66 engagés à coulissement l'un dans l'autre. Apparaît alors plus nettement, d'une part la pièce de liaison qui relie uniquement l'élément 64 des deux bras dans lequel viennent s'engager l'élément 66 et d'autre part la partie de réception 61 sur le manchon de connexion 22.

Ainsi, le dispositif d'accrochage 10 dans cette position repliée, occupe bien évidemment un espace longitudinal beaucoup plus restreint que celui qui l'occupe dans sa position déployée, et aussi un espace plus restreint par rapport au dispositif d'accrochage rigide conforme à l'art antérieur.

De la sorte, la conduite sous-marine flexible et le dispositif d'accrochage 10 conforme à l'invention vont pouvoir être installés depuis un bâtiment de surface en une seule opération et à travers les moyens classiques de dévidage de la conduite. En particulier, le dispositif d'accrochage 10 repliée pourra être entraîné à travers un puits d'installation ménagé dans le bâtiment de surface.

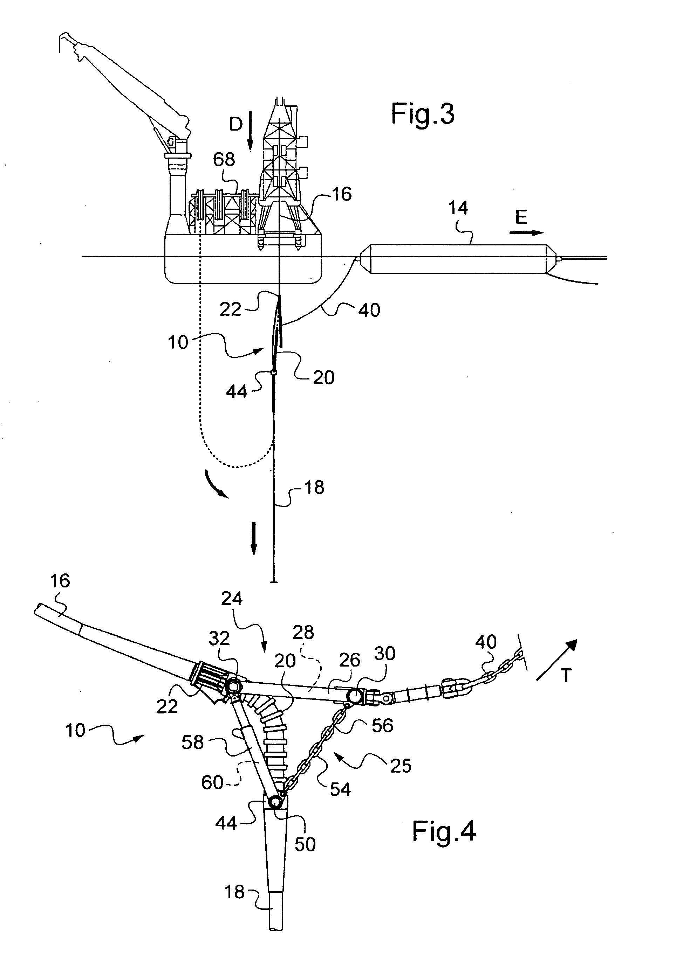

On retrouve ainsi sur la Figure 3, un bâtiment de surface 68 flottant à la surface à proximité duquel flotte également le flotteur 14. La partie montante 16 de la conduite sous-marine flexible 12 est initialement stockée et enroulée sur le bâtiment de surface 68, tout comme le dispositif d'accrochage 10, la partie de raccordement 18 et la portion intermédiaire 20 qui relie ensemble la partie montante 16 et la partie de raccordement 18. Ainsi, lors de l'installation de la conduite sous-marine, on pend le dispositif d'accrochage 10 à la partie montante 16 qui est initialement enroulée sur le bâtiment de surface 68 et on plonge tout d'abord à la verticale la partie de raccordement 18 et le dispositif d'accrochage 10 sous la surface. Le dispositif d'accrochage 10 est alors dans une position totalement identique à celle qu'il présente en détail sur la Figure 2. Ainsi, la charge du dispositif d'accrochage 10 et de la partie de raccordement 18 est intégralement reprise par la partie montante 16 au niveau du manchon de connexion 22. Dans cette position, l'organe d'accrochage 38 et l'extrémité 42 du flotteur 14 sont accrochés ensemble par la ligne 40.

À partir de cette position illustrée sur la Figure 3 une première longueur de la partie montante 16 est dévidée selon la flèche D à mesure que le flotteur 14 est écarté selon un sens E du bâtiment de surface 68 jusqu'à une distance donnée. Lorsque la partie montante de conduite est dite « rigide », elle présente néanmoins une certaine flexibilité qui permet de l'enrouler et de la dévider à partir du bâtiment de surface. Toutefois, le rayon de courbure minimal d'une conduite rigide est supérieur à celui d'une conduite flexible, de sorte que le dispositif de dévidage, sur le bâtiment de surface, doit être adapté et notamment incliné par rapport à la surface.

On retrouve le dispositif d'accrochage 10 sur la Figure 4, après que le flotteur 14 a ainsi été écarté du bâtiment de surface 68 et que la première longueur a été dévidée. La ligne 40 et la première longueur de partie montante 16 maintenue en charge par l'intermédiaire de la première partie longitudinal 24 du dispositif d'accrochage 10 sont alors étendus en caténaire. Ainsi, par rapport au dispositif d'accrochage 10 illustré sur la Figure 2, la ligne 40 par l'intermédiaire du flotteur 14 a exercé une traction T latérale sur la seconde entretoise 30 tandis que la première entretoise 32 est retenue par la partie montante 16 qui s'étend de manière sensiblement horizontale au niveau du manchon de connexion 22. De la sorte, la première partie longitudinale 24 a été entraînée en pivotement et s'étend sensiblement horizontalement également, tandis que les liens flexibles 56, 54 de la seconde partie 25 sont étendus longitudinalement. Par la même, la portion intermédiaire 20 est incurvée, puisque la partie de raccordement 18 a conservé sa position verticale initiale. Par ailleurs, la première entretoise 32 s'étant rapprochée de la bague 44 qui délimite la portion intermédiaire 20 de la partie de raccordement 18, les bras télescopiques 58, 60, se sont rétractés.

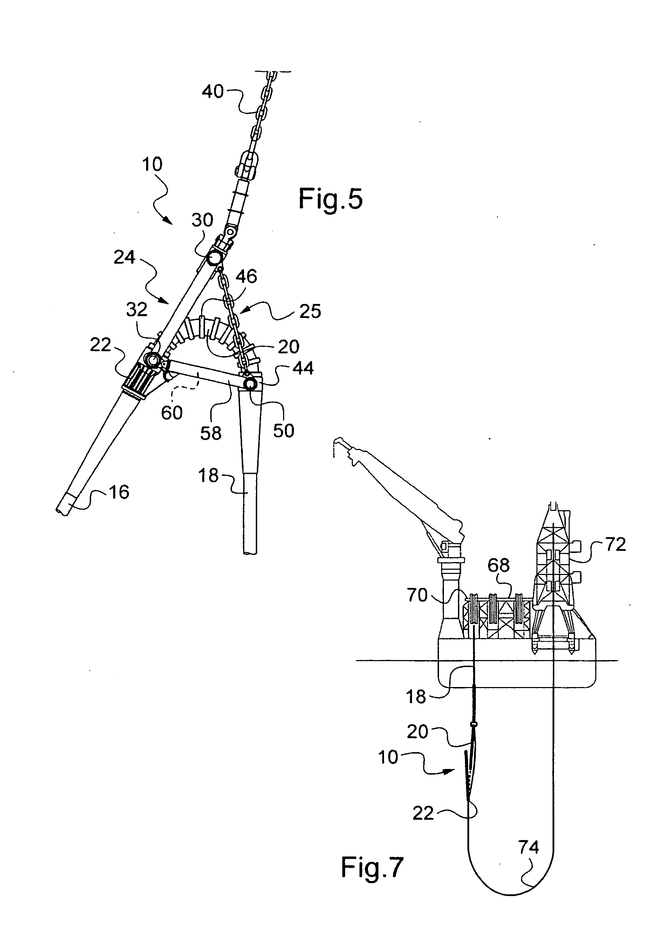

Ensuite, au fur et à mesure que la partie montante 16 est dévidée, elle exerce non seulement une force dirigée vers le fond marin de plus en plus importante sur la seconde entretoise 32 mais aussi, elle s'étend au niveau du manchon de connexion 22 selon une direction de plus en plus verticale. On retrouve alors sur la Figure 5, une situation intermédiaire, où le poids de la partie montante 16 est repris par le flotteur 14 non représenté, par l'intermédiaire de la première partie longitudinale 24 du dispositif d'accrochage 10 et de la ligne 40. Le basculement de la partie montante 16 qui s'effectue de manière continue et relativement lente au fur et à mesure de son dévidement, tend par la même, à faire pivoter la première partie longitudinale 24 vers une position verticale. En outre, au fur et à mesure que la traction est reprise par la ligne 40 solidaire du flotteur 14, les bras télescopiques 58, 60 se rétractent dans leurs positions de raccourcissement maximal, et maintiennent à distance la bague 44 et la seconde entretoise 32. Ainsi, la portion intermédiaire 20 s'incurve en col de cygne. Elle est préservée du pliage, ce qui l'endommagerait, déjà grâce au fourreau à vertèbres 46, mais encore plus sûrement grâce aux bras télescopiques 58, 60 qui maintiennent à distance la seconde entretoise 32 et la bague 44.

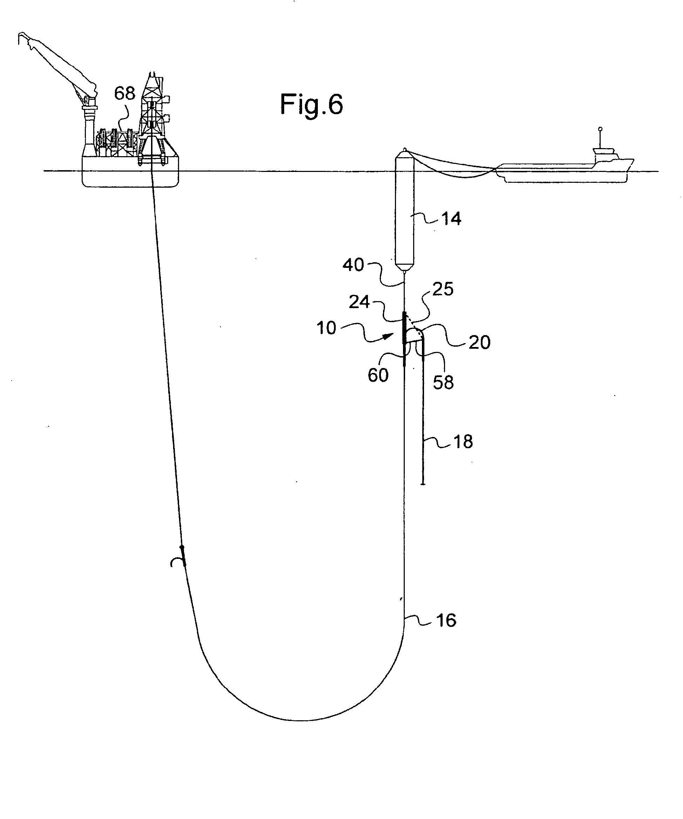

En poursuivant l'installation de la conduite sous-marine, telle que représentée sur la Figure 6, le flotteur 14 reprend la totalité de la charge de la partie montante 16 qui s'étend alors sensiblement verticalement. On retrouve alors le dispositif d'accrochage 10 dans une position analogue à celle qu'il présente sur la Figure 1. En outre, la portion intermédiaire 20 est maintenue incurvée en col de cygne grâce à la seconde partie 25 du dispositif d'accrochage 10 et aux bras de blocage 58, 60. Par ailleurs, la portion de raccordement 18 pend sensiblement parallèlement à la portion montante 16 et va pouvoir être récupérée pour être raccordée en surface à une installation de stockage en étant étendue en caténaire.

Conformément à un mode particulier d'installation de la conduite flexible, représenté sur la Figure 7 et dans une phase préalable à celle qui est illustrée sur la Figure 3, la partie de raccordement 18 et la portion intermédiaire 20 qui forment une seule partie de conduit comme on l'a expliqué ci-dessus, sont préalablement enroulées d'un côté de l'installation de surface 68, par exemple sur un premier touret 70, tandis que la partie montante de conduite 16 est enroulée d'un autre côté sur un second touret 72. Par ailleurs, le dispositif d'accrochage 10 est installé sur la partie de raccordement 18 et y est suspendu. En outre, le manchon de connexion 22 qui est initialement libre de la conduite montante 16 est relié à une ligne de traction 74 qui est étendue en boucle sous le bâtiment de surface 68 pour revenir du côté où est enroulé la partie montante 16 sur le bâtiment de surface 68 et en particulier au niveau du second touret 72. On dévide alors la partie de raccordement 18 vers le fond marin, tandis qu'on enroule la ligne de traction 74 sur le bâtiment de surface 68, pour entraîner le dispositif d'accrochage 10 sous le bâtiment de surface 68 et pour l'y ramener dessus au niveau du second touret 72 sur lequel est enroulée la partie montante 16. Le dispositif d'accrochage 10 est alors raccordé à la partie montante 16 et partant, à la portion intermédiaire 20, tandis que la partie de raccordement 18 est relâchée depuis ledit un côté de l'installation de surface 68. On retrouve alors les éléments de l'installation dans l'état où ils se trouvent tels qu'illustrés sur la Figure 3.

## Revendications

1. Méthode d'installation d'une conduite tubulaire sous-marine de transport d'hydrocarbures entre un fond marin et une surface, ladite conduite sous-marine présentant une partie montante (16), une partie de raccordement (18) en surface et une portion intermédiaire (20) entre ladite partie montante et ladite partie de raccordement, ladite méthode étant du type selon laquelle on fournit un flotteur (14) adapté à flotter au voisinage de ladite surface pour accrocher ensemble, ladite partie montante (16) et ladite partie de raccordement (18) en suspension de façon à maintenir ladite portion intermédiaire (20) incurvée en col de cygne entre ladite partie montante et ladite partie de raccordement, **caractérisée en ce qu'**elle comprend les étapes suivantes :
- on stocke ladite conduite tubulaire sous-marine sur un bâtiment flottant (68) à ladite surface ;
- on fournit un dispositif d'accrochage déformable (10) pour relier ensemble ladite partie montante (16) et ladite partie de raccordement (18) sensiblement parallèlement à ladite portion intermédiaire (20), ledit dispositif d'accrochage (10) comprenant une première partie longitudinale (24) et une seconde partie (25) reliée dans une zone d'accrochage (37) de ladite première partie (24) par un lien pivotant ;
- on relie ledit flotteur (14) et ladite zone d'accrochage (37) de ladite première partie longitudinale (24), tandis qu'on plonge ladite portion intermédiaire (20) et ledit dispositif d'accrochage (10) pendus à ladite partie montante (16) ; et,
- on dévide ladite partie montante (16) vers ledit fond de façon que ladite partie de raccordement (18) soit retenue par ledit flotteur (14) par l'intermédiaire de ladite seconde partie (25), et que ladite partie montante (16) bascule vers ledit fond en entraînant, en pivotement autour de ladite zone d'accrochage (37), ladite première partie (24) en incurvant ladite portion intermédiaire (20), ladite partie montante (16) étant retenue suspendue audit flotteur (14) par l'intermédiaire de ladite première partie (24).

2. Méthode d'installation selon la revendication 1, **caractérisée en ce qu'**on maintient lesdites deux parties (24, 25) du dispositif d'accrochage (10) inclinées l'une par rapport à l'autre en position fixe pour maintenir ladite portion intermédiaire (20) incurvée selon un rayon de courbure supérieur à un rayon de courbure limite.

3. Méthode d'installation selon la revendication 1 ou 2, **caractérisée en ce qu'**on définit des segments de ladite portion intermédiaire et **en ce qu'**on limite le pivotement desdits segments les uns par rapport aux autres de manière à limiter le rayon de courbure de ladite portion intermédiaire (20).

4. Méthode d'installation selon l'une quelconque des revendications 1 à 3, **caractérisée en ce qu'**on stocke d'un côté dudit bâtiment de surface (68) ladite partie de raccordement (18) reliée à ladite portion intermédiaire (20) et d'un autre côté, ladite partie montante (16) libre.

5. Méthode d'installation selon la revendication 4, **caractérisée en ce qu'**on accroche ensemble ladite portion intermédiaire (20) et ladite première partie longitudinale (24) à une ligne de traction (74), tandis que ladite seconde partie (25) et ladite portion intermédiaire (20) sont accrochées ensemble et suspendues à ladite partie de raccordement (18) ;
et **en ce qu'**on dévide ladite partie de raccordement (18) dudit un côté tandis qu'on renvide ladite ligne de traction (74) dudit autre côté en formant une boucle sous ledit bâtiment de surface (68) de manière à venir raccorder ladite portion intermédiaire (20) et ladite première partie longitudinale (24) accrochées ensemble, à ladite partie montante (16), sur ledit bâtiment de surface.

6. Méthode d'installation selon l'une quelconque des revendications 1 à 5, **caractérisée en ce qu'**on écarte ledit flotteur (14) dudit bâtiment de surface (68), après avoir relié ledit flotteur à ladite zone d'accrochage (37) de ladite première partie longitudinale (24) et plongé ladite portion intermédiaire (20) et ledit dispositif d'accrochage déformable (10), de manière à étendre en caténaire ladite partie montante (16) et ladite première partie (24).

7. Méthode d'installation selon l'une quelconque des revendications 1 à 6, **caractérisée en ce qu'**on étire ladite partie montante (16) vers ledit fond après avoir dévidé ladite partie montante, de manière à enfoncer ledit flotteur (14) sous ladite surface pour aligner et maintenir en tension sensiblement verticalement ladite partie montante et ladite première partie (24).

8. Installation sous-marine de transport d'hydrocarbures entre un fond marin et une surface, comprenant une conduite tubulaire sous-marine, un flotteur (14) adapté à flotter au voisinage de ladite surface et un dispositif d'accrochage (10) pour accrocher ladite conduite audit flotteur, ladite conduite tubulaire sous-marine présentant une partie montante (16), une partie de raccordement (18) en surface et une portion intermédiaire (20) entre ladite partie montante et ladite partie de raccordement, ledit dispositif d'accrochage (10) permettant d'accrocher ensemble, ladite partie montante (16) et ladite partie de raccordement (18) en suspension et de maintenir ladite portion intermédiaire (20) incurvée en col de cygne entre ladite partie montante (16) et ladite partie de raccordement (18),
**caractérisée en ce que** ledit dispositif d'accrochage (10) comprend une première partie longitudinale (24) et une seconde partie (25) reliée dans une zone d'accrochage (37) de ladite première partie (24) par un lien pivotant, de manière à relier ensemble ladite partie montante (16) et ladite partie de raccordement (18) sensiblement parallèlement à ladite portion intermédiaire (20), ladite zone d'accrochage (37) de ladite première partie longitudinale et ledit flotteur (14) étant adaptés à être reliés ensemble ;
et **en ce que** ladite première partie (24) est adaptée à pivoter autour de ladite zone d'accrochage (37) en incurvant ladite portion intermédiaire (20) lorsque ladite partie montante (16) est dévidée et bascule vers ledit fond, tandis que ladite partie de raccordement (18) est retenue par ledit flotteur (14) par l'intermédiaire de ladite seconde partie (25) et que ladite partie montante (16) est retenue suspendue audit flotteur (14) par l'intermédiaire de ladite première partie (24).

9. Installation sous-marine selon la revendication 8, **caractérisée en ce que** ladite première partie longitudinale (24) comporte deux montants (26, 28) sensiblement parallèles et deux entretoises opposées (30, 32) l'une de l'autre pour maintenir lesdits montants (26, 28) espacés l'un de l'autre, une première entretoise (32) étant destinée à recevoir ladite partie montante (16) et une seconde entretoise (30) définissant ladite zone d'accrochage (37), tandis que ladite partie intermédiaire (20) est apte à s'étendre librement entre lesdits montants (26, 28).

10. Installation sous-marine selon la revendication 9, **caractérisée en ce que** ladite seconde partie (25) comprend deux liens flexibles (54, 56) montés sur ladite seconde entretoise (30) respectivement au droit desdits montants (26, 28).

11. Installation sous-marine selon la revendication 10, **caractérisée en ce que** ladite seconde partie (25) comprend en outre une bague de retenue (44) apte à recevoir ladite partie de raccordement (18), ladite bague de retenue présentant deux demi-arbres (50, 52) diamétralement opposés en saillie, lesdits deux liens flexibles (54, 56) étant reliés respectivement aux deux demi-arbres.

12. Installation sous-marine selon l'une quelconque des revendications 8 à 11, **caractérisée en ce que** ledit dispositif d'accrochage (10) comporte en outre un bras de blocage (58 ; 60) pour maintenir lesdites deux parties (24, 25) du dispositif d'accrochage inclinées l'une par rapport à l'autre en position fixe pour maintenir ladite portion intermédiaire (20) incurvée selon un rayon de courbure supérieur à un rayon de courbure limite.

13. Installation sous-marine selon la revendication 12, **caractérisée en ce que** ledit bras de blocage (58 ; 60) est télescopique et **en ce qu'**il est apte à longer ladite portion intermédiaire (20) étendue, dans une position étirée.

14. Installation sous-marine selon l'une quelconque des revendications 8 à 13, **caractérisée en ce que** ladite portion intermédiaire (20) est logée à l'intérieur d'un fourreau à vertèbres (46) de manière à limiter le rayon de courbure de ladite portion intermédiaire (20).

## Claims

1. A method of installing a tubular undersea pipeline for transporting hydrocarbons between a seabed and a surface, said undersea pipeline having a rising part (16), a surface connecting part (18) and an intermediate portion (20) between said rising part and said connecting part, said method being of the type in which there is provided a float (14) designed to float in the vicinity of said surface in order to couple together said rising part (16) and said connecting part (18) in suspension so as to maintain said intermediate portion (20) curved in a swan's neck between said rising part and said connecting part, **characterized in that** it comprises the following steps:
- said tubular undersea pipeline is stored on a vessel (68) floating on said surface;
- a deformable coupling device (10) is provided to connect together said rising part (16) and said connecting part (18) substantially parallel to said intermediate portion (20), said coupling device (10) comprising a first longitudinal part (24) and a second part (25) connected in a coupling region (37) of said first part (24) by a pivoting link;
- said float (14) and said coupling region (37) of said first longitudinal part (24) are connected, while said intermediate portion (20) and said coupling device (10) hanging from said rising part (16) are submerged; and
- said rising part (16) is unwound toward said seabed such that said connecting part (18) is retained by said float (14) via said second part (25), and such that said rising part (16) tilts toward said seabed by driving, in a pivoting motion about said coupling region (37), said first part (24) while curving said intermediate portion (20), said rising part (16) being retained suspended from said float (14) via said first part (24).

2. The installation method as claimed in claim 1, **characterized in that** said two parts (24, 25) of the coupling device (10) are maintained inclined with respect to one another in a fixed position in order to maintain said intermediate portion (20) curved along a radius of curvature greater than a limit radius of curvature.

3. The installation method as claimed in claim 1 or 2, **characterized in that** segments of said intermediate portion are defined, and **in that** the pivoting of said segments with respect to one another is limited so as to limit the radius of curvature of said intermediate portion (20).

4. The installation method as claimed in any one of claims 1 to 3, **characterized in that** said connecting part (18) connected to said intermediate portion (20) is stored on one side of said surface vessel (68) and said free rising part (16) is stored on another side.

5. The installation method as claimed in claim 4, **characterized in that** said intermediate portion (20) and said first longitudinal part (24) are coupled together to a traction line (74), while said second part (25) and said intermediate portion (20) are coupled together and suspended from said connecting part (18);
and **in that** said connecting part (18) is unwound from said one side while said traction line (74) is wound up from said other side, thereby forming a loop below said surface vessel (68) so as to connect said intermediate portion (20) and said first longitudinal part (24) coupled together to said rising part (16), on said surface vessel.

6. The installation method as claimed in any one of claims 1 to 5, **characterized in that** said float (14) is separated from said surface vessel (68) after having connected said float to said coupling region (37) of said first longitudinal part (24) and submerged said intermediate portion (20) and said deformable coupling device (10), so as to extend said rising part (16) and said first part (24) in the form of a catenary.

7. The installation method as claimed in any one of claims 1 to 6, **characterized in that** said rising part (16) is drawn toward said seabed after having unwound said rising part, so as to drive said float (14) below said surface in order to align and maintain substantially vertically in tension said rising part and said first part (24).

8. An undersea installation for transporting hydrocarbons between a seabed and a surface, comprising a tubular undersea pipeline, a float (14) designed to float in the vicinity of said surface and a coupling device (10) for coupling said pipeline to said float, said tubular undersea pipeline having a rising part (16), a surface connecting part (18) and an intermediate portion (20) between said rising part and said connecting part, said coupling device (10) making it possible to couple together said rising part (16) and said connecting part (18) in suspension and to maintain said intermediate portion (20) curved in a swan's neck between said rising part (16) and said connecting part (18),
**characterized in that** said coupling device (10) comprises a first longitudinal part (24) and a second part (25) connected in a coupling region (37) of said first part (24) by a pivoting link, so as to connect together said rising part (16) and said connecting part (18) substantially parallel to said intermediate portion (20), said coupling region (37) of said first longitudinal part and said float (14) being designed to be connected together;
and **in that** said first part (24) is designed to pivot about said coupling region (37) while curving said intermediate portion (20) when said rising part (16) is unwound and tilts toward said seabed, whereas said connecting part (18) is retained by said float (14) via said second part (25) and said rising part (16) is retained suspended from said float (14) via said first part (24).

9. The undersea installation as claimed in claim 8, **characterized in that** said first longitudinal part (24) comprises two substantially parallel uprights (26, 28) and two mutually opposed spacers (30, 32) for maintaining said uprights (26, 28) spaced from one another, a first spacer (32) being intended to receive said rising part (16) and a second spacer (30) defining said coupling region (37), whereas said intermediate part (20) is able to extend freely between said uprights (26, 28).

10. The undersea installation as claimed in claim 9, **characterized in that** said second part (25) comprises two flexible links (54, 56) mounted on said second spacer (30) respectively in line with said uprights (26, 28).

11. The undersea installation as claimed in claim 10, **characterized in that** said second part (25) additionally comprises a retaining ring (44) able to receive said connecting part (18), said retaining ring having two projecting diametrically opposed half-shafts (50, 52), said two flexible links (54, 56) respectively being connected to the two half-shafts.

12. The undersea installation as claimed in any one of claims 8 to 11, **characterized in that** said coupling device (10) additionally comprises a locking arm (58; 60) for maintaining said two parts (24, 25) of the coupling device inclined with respect to one another in a fixed position in order to maintain said intermediate portion (20) curved along a radius of curvature greater than a limit radius of curvature.

13. The undersea installation as claimed in claim 12, **characterized in that** said locking arm (58, 60) is telescopic, and **in that** it is able to run alongside said extended intermediate portion (20), in a drawn position.

14. The undersea installation as claimed in any one of claims 8 to 13, **characterized in that** said intermediate portion (20) is housed inside a vertebra sheath (46) so as to limit the radius of curvature of said intermediate portion (20).

## Patentansprüche

1. Verfahren zur Installation einer Unterwasser-Rohrleitung für einen Transport von Kohlenwasserstoffen zwischen einem Meeresgrund und einer Oberfläche, wobei die Unterwasserleitung einen steigenden Abschnitt (16), einen Abschnitt zum Verbinden (18) an der Oberfläche und einen Zwischenabschnitt (20) zwischen dem steigenden Abschnitt und dem Abschnitt zum Verbinden aufweist, wobei das Verfahren von einer Art ist, der zufolge ein Schwimmer (14) bereitgestellt wird, welcher dafür ausgebildet ist, der Oberfläche benachbart zu schwimmen, um daran den steigenden Abschnitt (16) und den Abschnitt zum Verbinden (18) gemeinsam in der Weise hängend anzukoppeln, dass gewährleistet wird, dass der Zwischenabschnitt (20) wie ein Schwanenhals zwischen dem steigenden Abschnitt und dem Abschnitt zum Verbinden gekrümmt ist, **dadurch gekennzeichnet, dass** es die folgenden Schritte aufweist:
- die Unterwasser-Rohrleitung wird auf einem Schiff (68) gelagert, welches auf der Oberfläche schwimmt;
- eine verformbare Ankoppelvorrichtung (10) wird bereitgestellt, um den steigenden Abschnitt (16) und den Abschnitt zum Verbinden (18) miteinander im Wesentlichen parallel zu dem Zwischenabschnitt (20) zu verbinden, wobei die Ankoppelvorrichtung (10) einen ersten Längsabschnitt (24) und einen zweiten Abschnitt (25), welcher mit diesem in einem Haltebereich (37) des ersten Abschnitts (24) durch eine schwenkbare Verbindung verbunden ist, aufweist;
- der Schwimmer (14) und der Haltebereich (37) des ersten Längsabschnitts (24) werden verbunden, während der Zwischenabschnitt (20) und die Ankoppelvorrichtung (10) an dem steigenden Abschnitt (16) hängend eingetaucht werden; und
- der steigende Abschnitt (16) wird zu dem Grund hin in der Weise abgewickelt, dass der Abschnitt zum Verbinden (18) durch den Schwimmer (14) mittels des zweiten Abschnitts (25) zurückgehalten wird und dass der steigende Abschnitt (16) zu dem Grund hin umschwenkt und hierbei durch Schwenken um den Haltebereich (37) den ersten Abschnitt (24) unter Krümmen des Zwischenabschnitts (20) mitnimmt, wobei der steigende Abschnitt (16) an dem Schwimmer (14) mittels des ersten Abschnitts (24) aufgehängt zurückgehalten wird.

2. Verfahren zur Installation nach Anspruch 1, **dadurch gekennzeichnet, dass** die beiden Abschnitte (24, 25) der Ankoppelvorrichtung (10) zueinander geneigt in einer fixierten Lage gehalten werden, um zu gewährleisten, dass der Zwischenabschnitt (20) mit einem Krümmungsradius gekrümmt wird, der größer als ein Grenzkrümmungsradius ist.

3. Verfahren zur Installation nach Anspruch 1 oder 2, **dadurch gekennzeichnet, dass** Segmente des Zwischenabschnitts definiert werden und dass das Verschwenken der Segmente gegeneinander in der Weise eingeschränkt wird, dass der Krümmungsradius des Zwischenabschnitts (20) begrenzt wird.

4. Verfahren zur Installation nach einem der Ansprüche 1 bis 3, **dadurch gekennzeichnet, dass** auf einer Seite des Schiffs (68) an der Oberfläche der mit dem Zwischenabschnitt (20) verbundene Abschnitt zum Verbinden (18) und auf einer anderen Seite der freie steigende Abschnitt (16) gelagert werden.

5. Verfahren zur Installation nach Anspruch 4, **dadurch gekennzeichnet, dass** der Zwischenabschnitt (20) und der erste Längsabschnitt (24) gemeinsam an eine Zugleine (74) angekoppelt werden, während der zweite Abschnitt (25) und der Zwischenabschnitt (20) gemeinsam an den Abschnitt zum Verbinden (18) angekoppelt und an diesem aufgehängt werden;
und dass der Abschnitt zum Verbinden (18) von der einen Seite abgewickelt wird, während die Zugleine (74) von der anderen Seite unter Bilden einer Schleife unter dem Schiff (68) an der Oberfläche in der Weise wieder aufgewickelt wird, dass der Zwischenabschnitt (20) und der erste Längsabschnitt (24), die gemeinsam angekoppelt sind, für ein Verbinden dieser mit dem steigenden Abschnitt (16) auf dem Schiff an der Oberfläche folgen.

6. Verfahren zur Installation nach einem der Ansprüche 1 bis 5, **dadurch gekennzeichnet, dass** der Schwimmer (14) von dem Schiff (68) an der Oberfläche entfernt wird, nachdem der Schwimmer mit dem Haltebereich (37) des ersten Längsabschnitts (24) verbunden worden ist und der Zwischenabschnitt (20) und die verformbare Ankoppelvorrichtung (10) eingetaucht worden sind, in der Weise, dass der steigende Abschnitt (16) und der erste Abschnitt (24) kettenartig durchhängend ausgestreckt werden.

7. Verfahren zur Installation nach einem der Ansprüche 1 bis 6, **dadurch gekennzeichnet, dass** der steigende Abschnitt (16) zu dem Grund hin ausgezogen wird, nachdem der steigende Abschnitt abgewickelt worden ist, in der Weise, dass der Schwimmer (14) unter die Oberfläche einsinkt, um den steigenden Abschnitt und den ersten Abschnitt (24) im Wesentlichen vertikal auszurichten und unter Zug zu halten.

8. Unterwasseranlage für einen Transport von Kohlenwasserstoffen zwischen einem Meeresgrund und einer Oberfläche, mit einer Unterwasser-Rohrleitung, mit einem Schwimmer (14), welcher dafür ausgebildet ist, der Oberfläche benachbart zu schwimmen, und mit einer Ankoppelvorrichtung (10) zum Ankoppeln der Leitung an den Schwimmer, wobei die Unterwasser-Rohrleitung einen steigenden Abschnitt (16), einen Abschnitt zum Verbinden (18) an der Oberfläche und einen Zwischenabschnitt (20) zwischen dem steigenden Abschnitt und dem Abschnitt zum Verbinden aufweist, wobei die Ankoppelvorrichtung (10) es ermöglicht, den steigenden Abschnitt (16) und den Abschnitt zum Verbinden (18) gemeinsam hängend anzukoppeln und zu gewährleisten, dass der Zwischenabschnitt (20) wie ein Schwanenhals zwischen dem steigenden Abschnitt (16) und dem Abschnitt zum Verbinden (18) gekrümmt ist,
**dadurch gekennzeichnet, dass** die Ankoppelvorrichtung (10) einen ersten Längsabschnitt (24) und einen zweiten Abschnitt (25), welcher mit diesem in einem Haltebereich (37) des ersten Abschnitts (24) durch eine schwenkbare Verbindung verbunden ist, aufweist, derart, dass sie den steigenden Abschnitt (16) und den Abschnitt zum Verbinden (18) miteinander im Wesentlichen parallel zu dem Zwischenabschnitt (20) verbindet, wobei der Haltebereich (37) des ersten Längsabschnitts und der Schwimmer (14) dafür ausgebildet sind, miteinander verbunden zu werden;
und dass der erste Abschnitt (24) dafür ausgebildet ist, um den Haltebereich (37) unter Krümmen des Zwischenabschnitts (20) zu verschwenken, wenn der steigende Abschnitt (16) abgewickelt wird und zu dem Grund hin umschwenkt, während der Abschnitt zum Verbinden (18) durch den Schwimmer (14) mittels des zweiten Abschnitts (25) zurückgehalten wird und der steigende Abschnitt (16) an dem Schwimmer (14) aufgehängt mittels des ersten Abschnitts (24) zurückgehalten wird.

9. Unterwasseranlage nach Anspruch 8, **dadurch gekennzeichnet, dass** der erste Längsabschnitt (24) zwei im Wesentlichen parallele Säulen (26, 28) aufweist, und zwei einander gegenüberliegende Zwischenstücke (30, 32) aufweist, um die Säulen (26, 28) voneinander beabstandet zu halten, wobei ein erstes Zwischenstück (32) dafür bestimmt ist, den steigenden Abschnitt (16) aufzunehmen und wobei ein zweites Zwischenstück (30) den Haltebereich (37) definiert, während der Zwischenabschnitt (20) dafür geeignet ist, sich frei zwischen die Säulen (26, 28) zu erstrecken.

10. Unterwasseranlage nach Anspruch 9, **dadurch gekennzeichnet, dass** der zweite Abschnitt (25) zwei flexible Verbindungen (54, 56) aufweist, welche an dem zweiten Zwischenstück (30) jeweils quer zu den Säulen (26, 28) befestigt sind.

11. Unterwasseranlage nach Anspruch 10, **dadurch gekennzeichnet, dass** der zweite Abschnitt (25) ferner einen Haltering (44) aufweist, welcher dafür geeignet ist, den Abschnitt zum Verbinden (18) aufzunehmen, wobei der Haltering zwei Halbachsen (50, 52) aufweist, die diametral gegenüberliegend vorstehen, wobei die beiden flexiblen Verbindungen (54, 56) mit den beiden Halbachsen jeweils verbunden sind.

12. Unterwasseranlage nach einem der Ansprüche 8 bis 11, **dadurch gekennzeichnet, dass** die Ankoppelvorrichtung (10) ferner einen Blockierarm (58; 60) aufweist, um die zwei Abschnitte (24, 25) der Ankoppelvorrichtung zueinander geneigt in einer fixierten Lage zu halten, um zu gewährleisten, dass der Zwischenabschnitt (20) mit einem Krümmungsradius gekrümmt wird, der größer als ein Grenzkrümmungsradius ist.

13. Unterwasseranlage nach Anspruch 12, **dadurch gekennzeichnet, dass** der Blockierarm (58; 60) teleskopartig ausgebildet ist und dass er dafür geeignet ist, sich in einer ausgezogenen Position entlang des ausgestreckten Zwischenabschnitts (20) zu erstrecken.

14. Unterwasseranlage nach einem der Ansprüche 8 bis 13, **dadurch gekennzeichnet, dass** der Zwischenabschnitt (20) derart im Inneren eines Mantels mit Wirbeln (46) untergebracht ist, dass der Krümmungsradius des Zwischenabschnitts (20) begrenzt ist.
